# EUROPEAN PATENT APPLICATION

(11) **EP 2 086 040 A2**
(43) Date of publication of application: **05.08.2009**
(21) Application number: 09151700.3
(22) Date of filing: 30.01.2009
(51) Int. Cl.: H01M 4/66, H01M 4/04, H01M 10/40

(54) **A method for manufacturing a lithium ion secondary battery**

(30) Priority: 31.01.2008 JP 2008021146
(71) Applicant: Ohara Inc., Kanagawa, Kanagawa-ken (JP)
(72) Inventor: Teramoto, Jun, Kanagawa (JP)
(74) Representative: Jönsson, Hans-Peter

(57) **Abstract**

A method for manufacturing a lithium ion secondary battery includes a step of preparing a laminate comprising a solid electrolyte and a solid electrode or an electrode green sheet which is laminated on at least one surface of the solid electrolyte, and a step of providing a collector by laminating a collector material in the form of particles on the electrode or the electrode green sheet and sintering the collector material.

## Description

This invention relates to a method for manufacturing a lithium ion secondary battery.

As an electrolyte in a lithium ion secondary battery, an electrolyte in which a porous film called a separator is impregnated with a non-aqueous electrolytic solution has been generally used. Since this type of electrolyte is likely to cause leakage of liquid or combustion, there has recently been a proposal for using, instead of such electrolyte comprising liquid, a fully solid battery which uses an inorganic solid electrolyte. The fully solid battery which does not use a combustible organic solvent such as an electrolytic solution has no risk of leakage of liquid or combustion and therefore has excellent safety. Since, however, components of the fully solid battery, i.e., a positive electrode, an electrolyte and a negative electrode, are all made of solid substance, it has difficulty in securing sufficient contact in its interfaces between the positive electrode and the electrolyte and the negative electrode and the electrolyte resulting in increase in resistance in the interfaces. In this case, lithium ion conductivity in the interfaces between the electrolyte and the electrodes is not sufficiently high and, for this reason, such fully solid battery has not been offered for practical use yet.

As a method for manufacturing such fully solid battery efficiently, it is conceivable to prepare green sheets of a solid electrolyte and positive and negative electrodes from slurries which respectively comprise powder of specific compositions, and laminate such green sheet of the solid electrolyte, green sheet of the positive electrode and green sheet of the negative electrode together to provide a laminate of a lithium ion secondary battery.

Alternatively, a lithium ion secondary battery can be produced by sintering green sheets of a solid electrolyte, a positive electrode and a negative electrode individually and laminating the sintered solid electrolyte, positive electrode and negative electrode together to provide a laminate.

In the prior art lithium ion secondary battery, an aluminum foil is attached to the positive side of a laminate consisting of a solid electrolyte, a positive electrode and a negative electrode to provide a positive electrode collector and a cupper foil was attached to the negative side of the laminate to provide a negative electrode collector. In such fully solid laminate, however, there is the problem that an aluminum foil and a cupper foil are hard to adhere to the sintered positive and negative electrodes and, even when such metal foils have adhered to the electrodes, there tends to occur a small gap between the metal foils and the laminate and, as a result, electron conductivity becomes deteriorated and, moreover, the metal foils tend to come off the laminate due to expansion and shrinkage of the laminate accompanying charge and discharge of the battery whereby it is difficult to maintain the battery in a good condition for a long period of time.

In a case where a fully solid battery is produced by laminating a positive electrode and a negative electrode made by sintering green sheets on a solid electrolyte made by lapping and polishing an electrolyte substrate made by forming powder to a substrate and pressing and sintering the substrate or on a solid electrolyte made by lapping and polishing a bulk of glass-ceramics, there occurs the same problem as described above, i.e., collectors made of metal foils are hard to adhere to the laminate.

Moreover, since in the prior art battery, the collectors are made by separate processes, the method for manufacturing the fully solid battery is inefficient.

It is, therefore, an object of the invention to provide a method for manufacturing a fully solid lithium ion secondary battery in which, in providing a collector to a solid electrode which is made, e.g., by sintering a green sheet, the collector adheres tightly and closely to the electrode and is not likely to come off after completion of a battery whereby a fully solid lithium ion secondary battery can be efficiently manufactured.

As a result of studies and experiments made by the inventor of the invention for achieving the above described object of the invention, it has been found, which has led to the invention, that, by preparing a laminate comprising a solid electrolyte and a solid electrode or an electrode green sheet which is laminated on at least one surface of the solid electrolyte, and providing a collector by laminating a collector material in the form of particles on the electrode or the electrode green sheet and sintering the collector material, the collector adheres tightly and closely to the electrode and does not come off after completion of the battery whereby a fully solid battery can be efficiently manufactured.

For achieving the above described object of the invention, In the first aspect of the invention, there is provided a method for manufacturing a lithium ion secondary battery comprising
preparing a laminate comprising a solid electrolyte and a solid electrode or an electrode green sheet which is laminated on at least one surface of the solid electrolyte; and
providing a collector by laminating a collector material in the form of particles on the electrode or the electrode green sheet and sintering the collector material.

In the second aspect of the invention, there is provided a method as defined in the first aspect wherein the collector is laminated by coating a slurry containing the collector material.

In the third aspect of the invention, there is provided a method as defined in the first object wherein the collector is laminated by attaching a green sheet made by drying a slurry containing the collector material.

In the fourth aspect of the invention, there is provided a method as defined in the second or third aspect wherein the collector material comprises metal powder.

In the fifth aspect of the invention, there is provided a method as defined in the second or third aspect wherein the collector material comprises metal oxide powder.

In the sixth aspect of the invention, there is provided a method as defined in any of the first to fifth aspects wherein the collector material has an average particle diameter within a range from 0,001 µ m to 20 µ m.

In the seventh aspect of the invention, there is provided a method as defined in any of the first to sixth aspects wherein the solid electrolyte is produced by heat treating a green sheet comprising lithium ion conductive inorganic powder or inorganic powder which becomes lithium ion conductive when it is heat treated or both of them.

In the eighth aspect of the invention, there is provided a method as defined in the seventh aspect wherein the lithium ion conductive inorganic powder has a crystal of Li_{1+x+z}Mₓ(Ge_{1-y}Ti_{y})₂₋ₓSi_{z}P_{3-z}O₁₂ (0≦x≦0.8, 0≦y≦1.0, 0≦z≦0.6 and M is one or both of A1 and Ga).

In the ninth aspect of the invention, there is provided a method as defined in the seventh or eighth aspect wherein the inorganic powder which becomes lithium ion conductive when it is heat treated comprises, in mol % on oxide basis:

| | |
|---|---|
| Li₂O | 10 - 5% |
| Al₂O₃ and/or Ga₂O₃ | 0.5 - 15% |
| TiO₂ and/or GeO₂ | 25 - 50% |
| SiO₂ | 0 - 15% and |
| P₂O₅ | 26 - 40%. |

In the tenth aspect of the invention, there is provided a method as defined in the second aspect wherein the electrode is laminated by coating an electrode slurry comprising an active material on the solid electrolyte and sintering the electrode slurry.

In the eleventh aspect of the invention, there is provided a method as defined in the third aspect wherein the electrode is laminated by providing an electrode green sheet made by drying a slurry comprising an active material on the electrolyte and sintering the electrode green sheet.

In the twelfth aspect of the invention, there is provided a method for manufacturing a circuit substrate comprising a step of preparing a laminate by laminating an electrode or an electrode green sheet on at least one surface of a solid electrolyte; a step of laminating a collector material in the form of particles between the laminate and a current conducting unit of the circuit substrate; and a step of sintering the collector material.

According to the invention, by preparing a laminate comprising a solid electrolyte and a solid electrode or an electrode green sheet which is laminated on at least one surface of the solid electrolyte; and providing a collector by laminating a collector material in the form of particles on the electrode or the electrode green sheet and sintering the collector material, adherence of the collector material with the solid electrode is improved and generation of a small gap between the collector and the solid electrode can be prevented and, as a result, high electron conductivity can be achieved. In the completed battery, there is no likelihood of coming off of the collector by repeated expansion and shrinkage of the laminate accompanying charge and discharge of the battery and an excellent battery can be maintained over a long period of time.

According to the invention, since the slurry comprising the collector material in the form of particles is coated on the electrode or the green sheet made by drying such slurry is laminated on the electrode, a battery can be manufactured by a simple process.

Description will now be made about preferred embodiments of the invention.

As a laminate on which the collector of the invention is provided is cited a laminate which has a positive electrode made by heat treating a green sheet comprising a positive electrode active material and a negative electrode made by heat treating a green sheet comprising a negative electrode active material on opposite surfaces of a solid electrolyte which is made by heat treating a green sheet comprising lithium ion conductive inorganic powder or inorganic powder which becomes lithium ion conductive when it is heated or both of them, or a laminate which is produced by adhering the solid electrolyte and the positive electrode green sheet and/or the negative electrode green sheet together. As to the solid electrolyte, the method of the present invention can be applied not only to those cited above but also to a solid electrolyte made by forming powder to a substrate and pressing, sintering and polishing the substrate and a solid electrolyte made by lapping and polishing a bulk of glass-ceramics.

The solid electrolyte can be produced by sintering a green sheet comprising lithium ion conductive inorganic powder or inorganic powder which becomes lithium ion conductive when it is heat treated or both.

If pores exist in the solid electrolyte, no ion conducting path exists in such pores and, as a result, ion conductivity of the solid electrolyte itself is deteriorated. In case the electrolyte is used in a battery, the higher the ion conductivity is, the higher becomes mobility of lithium ion and a battery having a higher output thereby can be produced. Therefore, a low rate of pores in the solid electrolyte is desirable and should be preferably 20 vol % or below. For making the rate of pores to 20 vol % or below, the solid electrolyte should be preferably made of a green sheet.

In the present specification, the term "green sheet" means an unsintered material which comprises unsintered glass powder or unsintered ceramic powder such as inorganic oxides mixed with an organic binder, plasticizer and solvent and is formed to a thin film. This forming of the thin film green sheet from the mixed slurry can be made by a coating method such as using a doctor blade or a calendaring, spin coating or dip coating, a printing method such as using ink jet, Bubble Jet (trademark) or offsetting, a die coater method or a spray method. The thin film green sheet is generally prepared by forming the mixed slurry on a film made of, e.g., a PET film, which has been applied with a releasing treatment and releasing the thin film green sheet after drying it. Alternatively, the mixed slurry may be formed directly on a material such as ceramic to which the mixed slurry should be laminated and the layer prepared by this method may be included in the meaning of green sheet. The green sheet before sintering is soft and can be cut into a desired shape or laminated to other member.

By forming the green sheet to a uniform thickness, the green sheet is heated uniformly during sintering and sintering proceeds uniformly throughout the material and, as a result, a solid electrolyte in the form of a sheet which is tight and has a low rate of pores of 20 vol % or below can be provided. For this reason, variation in thickness of the green sheet before sintering should preferably be within a range from +10% to -10% to an average value of distribution of the thickness of the green sheet before sintering. Further, by blending raw materials sufficiently, the composition of the green sheet can be made uniform and, by pressing and thereby tightening the green sheet by using a roll press or a monoaxial, isotropic pressing method, an solid electrolyte which is tight and has a low rate of pores can be provided whereby a solid electrolyte having high ion conductivity and high output can be provided. It is desirable that mixing of raw materials should be made in, e.g., a ball mill for at least one hour.

The thinner is the solid electrolyte in the form of a sheet which is preferable as the lithium ion secondary battery of the invention, the shorter is the moving distance of lithium ion and, as a result, a battery of a higher output can be provided. Further, by making the solid electrolyte thinner, a broader area of the electrode per unit volume can be secured and, as a result, a battery of a higher capacity can be provided. Therefore, thickness of the electrolyte layer used as the solid electrolyte should be preferably 500 µ m or below, more preferably 400 µ m and most preferably 300 µ m or below.

Mobility of lithium ion during charge and discharge of a lithium ion secondary battery depends upon lithium ion conductivity and lithium ion transport number of the electrolyte. Therefore, it is preferable to use a material having high lithium ion conductivity as the solid electrolyte of the present invention.

Ion conductivity of the lithium ion conductive powder after heat treatment or the powder which becomes lithium ion conductive when it is heat treated after heat treatment should be preferably 1 × 10⁻⁴ S·cm⁻¹ or over, more preferably 5 × 10⁻⁴ S· cm⁻¹ or over and most preferably 1 × 10⁻³ S · cm⁻¹ or over.

The lithium ion conductive inorganic powder used in the present invention is powder of a lithium ion conductive crystal (ceramic or glass-ceramics) or powder of an inorganic substance comprising powder of mixture thereof. The inorganic powder which becomes lithium ion conductive when it is heat treated is glass powder which becomes glass-ceramics by heat treatment.

Lithium ion conductivity herein means that the degree of lithium ion conductivity exhibits a value of 1 × 10⁻⁸S · cm⁻¹ or over at 25°C.

The lithium ion conductive inorganic powder or the inorganic powder which becomes lithium ion conductive when it is heat treated should preferably have an average particle diameter of 3 µm or below and a maximum particle diameter of 15 µm or below. By this arrangement, a solid electrolyte having few voids and therefore having high ion conductivity can be provided.

For obtaining this effect, the lithium ion conductive inorganic powder or the inorganic powder which becomes lithium ion conductive when it is heat treated should more preferably have an average particle diameter of 2 µ m or below, most preferably 1 µ m or below.

Similarly, for obtaining this effect, the lithium ion conductive inorganic powder or the inorganic powder which becomes lithium ion conductive when it is heat treated should preferably have a maximum particle diameter of 10 µ m or below, most preferably 5 µ m or below.

As the maximum particle diameter and the average particle diameter, a value measured by a particle diameter distribution measuring apparatus LS100Q or a sub-micron particle analyzer N5 made by Beckman Coulter Inc. can be used. The above described average particle diameter is a value at D50 (accumulated 50% diameter) measured by the laser diffraction method. The above described measuring apparatuses are used selectively depending upon a particle diameter of a material to be measured. In case the maximum particle diameter of a material to be measured is less than 3 µ m, the sub-micron particle analyzer N5 is used for measurement. In case the minimum particle diameter of a material to be measured is 0.4 µ m or over, the particle diameter distribution measuring apparatus LS100Q is used for measurement. In case the maximum particle diameter of a material to be measured is 3 µ m or over and the minimum particle diameter thereof is less than 0.4 µ m, LS100Q is used first and, when the peak of the distribution curve is 2 µ m or over, the value obtained by LS100Q is used. When the peak of the distribution curve is less than 2 µ m, a value obtained by using N5 is used. The above described average particle diameter is a value expressed on volume basis.

As the lithium ion conductive crystal to be used, a crystal which does not contain crystal grain boundary which hampers ion conduction can be advantageously used in respect of ion conductivity. As such crystal can be cited a crystal having lithium ion conductive perovskite structure such as LiN, LiSiCON and La_{0.55}Li_{0.35}TiO₃, LiTi₂P₃O₁₂ having NASICON structure or glass-ceramics which precipitate such crystal. A preferable lithium ion conductive crystal is Li_{1+x+z}Mₓ(Ge_{1-y}Ti_{y})₂₋ₓSi_{z}P_{3-z}O₁₂ where 0≦x≦0.8, 0≦y≦1.0 and 0≦z≦0.6, M is one or both of Al and Ga. Since glass-ceramics precipitating crystals having NASICON structure has little void and crystal grain boundary which hamper ion conduction, they have high ion conductivity and excellent chemical durability and, therefore, are particularly preferable.

By comprising a large amount of these glass-ceramics in the solid electrolyte high ion conductivity can be achieved and, therefore, the solid electrolyte should preferably contain lithium ion conductive glass-ceramics in an amount 80 wt % or over, more preferably 85 wt % or over and most preferably 90 wt % or over.

In this specification, the void and crystal grain boundary which hamper ion conduction mean ion conduction hampering elements such as void and crystal grain boundary which reduce the degree of conduction of the entire inorganic substance including the lithium ion conductive crystal to 1/10 of the degree of conduction of lithium ion conductive crystal in the inorganic substance.

Glass-ceramics in this specification mean a material which has a crystal phase precipitating in a glass phase and consists of an amorphous solid and crystal. Glass-ceramics include a material in which all of the glass phase is converted to the crystal phase on the condition that substantially no void or crystal grain boundary exists in the glass-ceramics, namely a material in which the degree of crystallization is 100 mass %.

Ceramics and other sintered materials generally cannot avoid occurrence of voids and crystal grain boundary in crystals due to the manufacturing process of such ceramics and sintered materials and glass-ceramics can be distinguished from such ceramics and sintered materials in this respect. Particularly, as regards ion conductivity, ceramics have considerably lower ion conductivity than ion conductivity of their crystal grains themselves due to existence of voids and crystal grain boundary. In glass-ceramics, decrease in conductivity between crystals can be prevented by controlling the crystallizing process whereby conductivity which is substantially equivalent to conductivity of crystal grains themselves can be maintained.

As a material other than glass-ceramics having little voids and crystal grain boundary hampering ion conduction, a single crystal of each of the above described crystals can be cited. Since, however, it is difficult to produce such single crystal and therefore manufacturing cost of such single crystal becomes very high, it is more preferable to use glass-ceramics.

Preferable lithium ion conductive glass-ceramics are glass-ceramics which are produced by heat treating mother glass of Li₂O - Al₂O₃ - TiO₂ - SiO₂ - P₂O₅ type for crystallization and have a predominant crystal phase of Li_{1+x+y}AlₓTi₂₋ₓSi_{y}P_{3-y}O₁₂ where preferably 0≦x≦1.0, 0≦y≦1, more prefexably 0≦x≦0.4, 0≦y≦ 0.6 and most preferably 0.1≦x≦0.3, 0.1≦y≦0.4.

By using these glass-ceramics, glass can be easily obtained by casting molten glass and glass-ceramics having the above described crystal phase obtained by heat treating this glass have high lithium ion conductivity. In glass-ceramics having a similar composition to the above composition, Al₂O₃ may be replaced by Ga₂O₃ and TiO₂ may be replaced by GeO₂, partially or wholly so long as the glass-ceramics have a similar crystal structure. For lowering the melting point of the glass or improving stability of the glass in producing glass-ceramics, other materials may be added in a small amount within a range in which ion conductivity is not deteriorated.

The inorganic powder which becomes lithium ion conductive when it is heat treated should preferably comprise, in mol % on oxide basis Li₂O in an amount of 10 - 25%, Al₂O₃ and/or Ga₂O₃ in an amount of 0.5 - 15%, TiO₂ and/or GeO₂ in an amount of 25 - 50%, SiO₂ in an amount of 0 - 15% and P₂O₅ in an amount of 26- 40%.

The composition of the glass-ceramics should not preferably comprise alkali metals other than Li₂O such as Na₂O and K₂O. When these components exist in the glass-ceramics, conduction of Li ion is obstructed due to a mixing effect of alkali ion with the result that ion conductivity is decreased. When sulfur is added to the composition of the glass-ceramics, lithium ion conductivity is increased to some extent but chemical durability and stability are deteriorated and, therefore, sulfur should not preferably be added. In the composition of the glass-ceramics, components such as Pb, As, Cd and Hg which are likely to have adverse effects to the environment and to human body should not preferably be added.

Lithium ion conductive inorganic powder, i.e., powder of glass or crystal (ceramics or glass-ceramics) having high lithium ion conductivity and chemical stability or glass powder which becomes lithium ion conductive when it is heat treated, or powder of mixture of these materials, is mixed with organic binder and, if necessary, a dispersing agent etc. by using a solvent and this mixture is formed to a green sheet by a simple forming process such, for example, as using a doctor blade. The prepared green sheet then is processed to a desired shape, pressed preferably by roll pressing or monoaxial, isotropic pressure pressing. The green sheet then is sintered and an organic component of the organic binder is thereby removed. Thus, a fully solid electrolyte in the form of a thin sheet or any desired shape can be produced.

In the case of the solid electrolyte green sheet, from the standpoint of reducing a gap after sintering, the lower limit of the amount of the lithium ion conductive inorganic powder or the inorganic powder which becomes lithium ion conductive when it is heat treated which is to be mixed with an organic binder should be preferably 50 wt %, more preferably 55 wt % and most preferably 60 wt % to the amount of the mixed slurry comprising the inorganic powder, organic binder, plasticizer and solvent. For the same reason, the upper limit of the amount of the lithium ion conductive inorganic powder or the inorganic powder which becomes lithium ion conductive when it is heat treated in the solid electrolyte after drying should be preferably 97 wt %, more preferably 94 wt % and most preferably 90 wt %.

From the standpoint of maintaining the shape of sheet, the upper limit of the amount of the lithium ion conductive inorganic powder or the inorganic powder which becomes lithium ion conductive when it is heat treated should be preferably 90 wt %, more preferably 85 wt % and most preferably 80 wt % to the amount of the mixed slurry. For the same reason, the upper limit of the amount of the lithium ion conductive inorganic powder or the inorganic powder which becomes lithium ion conductive when it is heat treated in the green sheet after drying should be preferably 97 wt %, more preferably 94 wt % and most preferably 90 wt %.

As the organic binder used for preparing of the green sheet, a binder which is commercially available as a forming additive for a doctor blade may be used. Forming additives other than the one for a doctor blade which are generally used for rubber press and extrusion molding may also be used. More specifically, acrylic resin, ethyl cellulose, polyvinyl butyral , methacrylic resin, urethane resin, butyl methacrylate and vinyl type copolymer, for example, may be used. As other materials than such binder, it is preferable to add a suitable amount of a dispersing agent for improving dispersion of particles and a surfactant for enhancing defoaming during the drying process.

For maintaining the shape of sheet, the lower limit of an amount of the organic binder should be preferably 1 wt %, more preferably 3 wt % and most preferably 5 wt % to the amount of the mixed slurry comprising the active material powder (in the case of the positive electrode or the negative electrode), inorganic powder, organic binder, plasticizer and solvent,

For the same reason, the lower limit of an amount of the organic binder in the green sheet after drying should be preferably 3 wt %, more preferably 5 wt % and most preferably 7 wt %.

For reducing the gap after sintering, the upper limit of the amount of the organic binder should be preferably 50 wt %, more preferably 40 wt % and most preferably 30 wt % to the amount of the slurry.

For the same reason, the upper limit of the amount of the organic binder in the green sheet after drying should be preferably 40 wt %, more preferably 35 wt % and most preferably 30 wt %.

For increasing electron conductivity without hampering lithium ion conductivity, other inorganic powder or organic substance may also be added. Such effect can be achieved by adding a small amount of insulating crystal or glass having a high dielectric property as an inorganic powder. As such materials, BaTiO₃, SrTiO₃, Nb₂O₅ and LaTiO₃, for example, can be cited. Since organic substance is removed during sintering, such material may be also used for adjusting viscosity of the slurry during the forming process without causing any problem.

For forming a green sheet, a simple doctor blade, roll coater or die coater may be used. If viscosity is adjusted suitably, a universal type apparatus for blending and extrusion can be used and, therefore, various shapes of solid electrolytes can be produced efficiently and cheaply.

The solid electrolyte green sheet prepared in this manner is sintered at a temperature of 1200°C or below.

Since the solid electrolyte obtained by sintering has the shape of the formed green sheet directly or as a reduced similar figure, it can be processed to any desired shape easily and, therefore, a solid electrolyte in the form of a thin film or any other shape can be produced and a fully solid lithium ion secondary battery using this solid electrolyte can be produced. Since the solid electrolyte after sintering does not contain an organic substance, it has superior heat resistance property and chemical durability and moreover has no problem to safety and to the environment.

The volume of the thin film solid electrolyte should preferably be 55 vol % or over. By having this volume, tightening of the solid electrolyte can be realized while deformation due to shrinkage during sintering is prevented.

Ion conductivity after heat treatment of the lithium ion conductive inorganic powder or the inorganic powder which becomes lithium ion conductive when it is heat treated should preferably be 1×10⁻⁴S·cm⁻¹ or over at room temperature.

Ion conductivity after heat treatment of the solid electrolyte green sheet comprising the lithium ion conductive inorganic powder or the inorganic powder which becomes lithium ion conductive when it is heat treated or both of them should preferably be 5 × 10⁻⁵S·cm⁻¹ or over.

As the active material used in the positive electrode of the laminate consisting of the thin film solid electrolyte, positive electrode and negative electrode, a transient metal compound which can store and discharge Li ion and, as such transition metal compound, a transition metal oxide comprising at least one of Mn, Co, Ni, V, Nb, Mo, Ti, Fe, P, Al and Cr, for example, may be used.

If the amount of the active material in the positive electrode green sheet is insufficient, density tends to be low and shrinkage tends to be large after sintering. Therefore, the lower limit of the active material in the positive electrode green sheet should be preferably 40 wt %, more preferably 50 wt % and most preferably 60 wt %.

If the amount of the active material in the positive electrode green sheet is excessive, the green sheet loses flexibility and handling of the green sheet thereby becomes difficult. Therefore, the upper limit of the active material in the positive electrode green sheet should be preferably 97 wt %, more preferably 94 wt % and most preferably 90 wt %.

For obtaining a positive electrode green sheet having the above described amount of the active material and also for preparing a slurry which can be coated smoothly, the amount of the active material of the positive electrode should be preferably 10 wt % or over, more preferably 15 wt % or over and most preferably 20 wt % or over to the amount of the mixed slurry comprising the positive electrode active material powder, inorganic powder, organic binder, plasticizer and solvent.

For preparing a slurry which can be coated smoothly, the upper limit of the positive electrode active material should be preferably 90 wt %, more preferably 85 wt % and most preferably 80 wt % to the amount of the mixed slurry.

In case electron conductivity of the positive electrode active material is low, electron conductivity can be imparted by adding an electron conduction additive. As such electron conduction additive, a fine particle or fibrous carbon or metal material may be used. Metals which can be used as the electron conduction additive include Ti, Ni, Cr, Fe including stainless steel and Al and precious metals such as Pl, Au and Rh.

In this laminate for the lithium ion secondary battery, as the active material used in the negative electrode green sheet, materials which can store and discharge Li ion such, for example, as alloys of Al, Si an Sn and metal oxides such as oxides of Ti, V, Cr, Nb and Si may be used.

If the amount of the active material in the negative electrode green sheet is insufficient, density tends to be low and shrinkage tends to be large after sintering. Therefore, the lower limit of the active material in the negative electrode green sheet should be preferably 40 wt %, more preferably 50 wt % and most preferably 60 wt %.

If the amount of the active material in the negative electrode green sheet is excessive, the green sheet loses flexibility and handling of the green sheet thereby becomes difficult. Therefore, the upper limit of the active material in the negative electrode green sheet should be preferably 97 wt %, more preferably 94 wt % and most preferably 90 wt %.

For obtaining a negative electrode green sheet having the above described amount of the active material and also for preparing a slurry which can be coated smoothly, the lower limit of the amount of the active material of the negative electrode should be preferably 10 wt %, more preferably 15 wt % and most preferably 20 wt % to the amount of the mixed slurry comprising the negative electrode active material powder, inorganic powder, organic binder, plasticizer and solvent.

Since the active material must be prepared as the slurry by using a binder and solvent, the upper limit of the negative electrode active material should be preferably 90 wt %, more preferably 80 wt % and most preferably 75 wt % to the amount of the mixed slurry.

In case electron conductivity of the negative electrode active material is low, electron conductivity can be imparted by adding an electron conduction additive. As such electron conduction additive, a fine particle or fibrous carbon or metal material may be used. Metals which can be used as the electron conduction additive include Ti, Ni, Cr, Fe including stainless steel and Al and precious metals such as Pl, Au and Rh.

For imparting ion conductivity, it is preferable to add the lithium ion conductive inorganic powder to the positive electrode green sheet and the negative electrode green sheet. More specifically, these green sheets may comprise the lithium ion conductive glass-ceramics. It is more preferable to add the ion conductive inorganic powder that is the same as the one added to the solid electrolyte green sheet. By adding the same inorganic powder in this manner, the ion moving mechanism of the electrolyte becomes common to the ion moving mechanism of the electrodes whereby ion movement between the electrolyte and the electrodes can be performed smoothly and a battery having a higher output and higher capacity can be provided.

In the case of the positive electrode green sheet, for imparting ion conductivity, the lower limit of the amount of the lithium ion conductive inorganic powder to be mixed with the organic binder should be preferably 1 wt %, more preferably 3 wt % and most preferably 5 wt % to the amount of the mixed slurry comprising the positive electrode active material powder, inorganic powder, organic binder, plasticizer and solvent.

For the same reason, the lower limit of the amount of the lithium ion conductive inorganic powder in the positive electrode green sheet after drying should be preferably 3 wt %, more preferably 5 wt % and most preferably 10 wt % to the amount of the mixed slurry.

If the amount of the lithium ion conductive inorganic powder is excessive, the amount of the active material is small with resulting decrease in the capacity of the battery. Therefore, the upper limit of the amount of the lithium ion conductive inorganic powder should be preferably 50 wt %, more preferably 40 wt % and most preferably 30 wt % to the amount of the mixed slurry.

For the same reason, the upper limit of the amount of the lithium ion conductive inorganic powder in the positive electrode green sheet after drying should be preferably 70 wt %, more preferably 60 wt % and most preferably 50 wt % to the amount of the mixed slurry.

In the case of the negative electrode green sheet, for imparting ion conductivity, the lower limit of the amount of the lithium ion conductive inorganic powder to be mixed with the organic binder should be preferably 1 wt %, more preferably 3 wt % and most preferably 5 wt % to the amount of the mixed slurry comprising the negative electrode active material powder, inorganic powder, organic binder, plasticizer and solvent.

For the same reason, the lower limit of the amount of the lithium ion conductive inorganic powder in the positive electrode green sheet after drying should be preferably 3 wt %, more preferably 5 wt % and most preferably 10 wt % to the amount of the mixed slurry.

If the amount of the lithium ion conductive inorganic powder is excessive, the amount of the active material is small with resulting decrease in the capacity of the battery. Therefore, the upper limit of the amount of the lithium ion conductive inorganic powder should be preferably 50 wt %, more preferably 40 wt % and most preferably 30 wt % to the amount of the mixed slurry.

For the same reason, the upper limit of the amount of the lithium ion conductive inorganic powder in the negative electrode green sheet after drying should be preferably 70 wt %, more preferably 60 wt % and most preferably 50 wt % to the amount of the mixed slurry.

The positive electrode green sheet and the negative electrode are produced in the same manner as the thin film solid electrolyte is produced.

The thin film positive electrode green sheet and the thin film negative electrode green sheet made in this manner are sintered respectively at optimum sintering temperatures depending upon materials thereof. Optimum sintering temperatures of the positive electrode green sheet and the negative electrode green sheet are normally within a range from 500°C to 1000°C .

By providing a collector material in the form of particles on the positive electrode side and the negative electrode side of a laminate consisting of the thin film solid electrolyte, solid electrode and negative electrode and sintering the collector material, or by providing a collector material in the form of particles on the positive electrode green sheet side and the negative electrode green sheet side of a laminate consisting of the thin film solid electrolyte, positive electrode green sheet and negative electrode green sheet and sintering the laminate, a collector can be produced.

The collector may be laminated by coating a slurry containing a collector material or may be laminated by attaching a green sheet which is made by drying a slurry containing a collector material. In a general liquid type battery or polymer battery, a positive electrode and a negative electrode are formed by coating electrode slurries containing a positive electrode active material and a negative electrode active material on metal foils which constitute collectors and, therefore, there is good adhesion between the collectors and the electrodes. In the fully solid battery, however, if solid electrodes are formed by coating electrode slurries on metal foils and sintering them in the same manner as in the liquid type battery or polymer battery, there arises a serious problem that the metal foils are deteriorated and interface resistance is large when the electrodes are assembled with a solid electrolyte. Further, in a case where an electrode slurry is coated between a metal foil and a solid electrolyte and sintered, detachment between the layers tends to occur during a process for removing a binder in the electrode slurry with the result that it becomes difficult to form a good interface between the solid electrolyte and the electrode. For these reasons, by forming a collector from a slurry or a green sheet, there is formed an interface by which adherence of the collector with the electrode after sintering is so good that the collector does not easily come off the electrode is formed.

A collector material may contain metal powder for obtaining high electron conductivity. As a positive electrode collector, aluminum powder, e.g., may preferably be used. As a negative electrode collector, cupper powder, e.g., may preferably be used. As a collector material for both of positive and negative electrodes, SUS powder, e.g., may preferably be used.

A collector material may contain metal oxide powder for obtaining electron conductivity. As a collector material for both of positive and negative electrodes, powder of iron oxide, tin oxide, titanium oxide and nickel oxide, e.g., may preferably be used.

An average particle diameter of the collector material should be preferably within a range from 0.001 µm to 20 µm. By this arrangement, a collector which is tight and has few voids and therefore has good electron conductivity can be provided. For achieving this effect, the lower limit of the average particle diameter is 0.001 µ m for forming the collector uniformly without condensation and most preferably 0.005 µ m. Similarly, for obtaining this effect, the upper limit of the average particle diameter is 20 µm for forming the collector as thinly as possible and uniformly and most preferably 10 µ m.

Such collector material in the form of particles is added to a solution of a resin used as a binder to form a slurry. As a resin for the binder, a mixture of N-methyl pyrrolidone (NMP) and polyfluorovinylidene (Pvdf) e.g., may be preferably used.

For obtaining a slurry which can be well coated, the upper limit of the amount of the collector material in the slurry should be preferably 95 wt %, more preferably 90 wt % and most preferably 85 wt %. Similarly, for obtaining the same effect, the lower limit of the amount of the collector material in the slurry should be preferably 5 wt%, more preferably 10 wt % and most preferably 15 wt%.

After coating the slurry containing this collector material on the laminate or attaching the green sheet made from this slurry to the laminate, the laminate provided with the collector material is sintered.

A positive electrode lead is connected to the positive electrode side of the laminate formed in this manner and a negative electrode lead is connected to the negative electrode side of the laminate and a lithium ion secondary battery thereby is completed.

By preparing a laminate by forming a solid electrode on at least one surface of a solid electrolyte and then laminating a collector material in the form of particles between the laminate and a current conducting unit of a circuit substrate and sintering the collector material, a circuit substrate mounted with a lithium ion secondary battery can be produced.

### Example 1

### Preparation of oxide glass powder

As raw materials, HaPO₄, Al(PO₃), Li₂CO₃, SiO₂ and TiO₂ were used. These raw materials were weighed to obtain a composition in mol % on oxide base having 35.1% P₂O₅, 7.6% Al₂O₃, 14.8% Li₂O, 38.2% TiO₂ and 4.3% SiO₂. The raw materials were mixed uniformly and then put in a platinum pot. The raw materials were heated and melted while being stirred in an electric furnace at 1500°C for three hours to provide molten glass.

Then, the molten glass was dripped into flowing water at room temperature from a platinum pipe attached to the platinum pot while the molten glass was heated and the molten glass thereby was promptly cooled to provide an oxide glass.

This glass was crystallized in an electric furnace at 950°C and lithium ion conductivity was measured. The lithium ion conductivity was 5.5 ×1 0⁻⁴ S cm⁻¹ at room temperature.

By the powder X-ray diffraction method, the precipitating crystal phase was examined and it was confirmed that Li_{1+x+y}AlₓTi_{y2-x}Si_{y}P_{3-y}O₁₂ where 0≦x≦0.4 and 0≦y≦0.6 was a predominant crystal phase.

The oxide glass then was crushed by a jet mill and put in a ball mill containing ethanol as a solvent for wet crushing whereby two kinds of oxide glass powder, one having an average particle diameter of 0.8 µ m and a maximum particle diameter of 2.5 µ m and the other having an average particle diameter of 0.5 µ m and a maximum particle diameter of 1 µ m were provided.

### Preparation of an electrolyte green sheet

The oxide powder having an average particle diameter of 0.5 µ m was mixed and dispersed with an acrylic binder,, a dispersing agent and a defoaming agent by using water as a solvent and en electrolyte slurry was prepared. The slurry was subjected to defoaming by reducing pressure and then was formed by using a doctor blade and dried to provide an electrolyte green sheet having thickness of 35 µ m.

### Preparation of a positive electrode

As a positive electrode active material, commercially available lithium manganate was used. Lithium manganate powder which was crushed to an average particle diameter of 0.8 µ m and oxide glass powder having an average particle diameter of 0.5 µ m were weighed at a ratio of 72.5 : 27.5 These materials were dispersed and mixed with an acrylic binder and a dispersing agent by using water as a solvent to prepare a positive electrode slurry. The slurry was subjected to defoaming by reducing pressure and then was formed by using a doctor blade and dried to provide a positive electrode green sheet having thickness of 30 µ m.

### Preparation of a negative electrode

As a negative electrode active material, commercially available Li₄Ti₅O₁₂ was used after annealing it at 500 °C . LI₄Ti₅O₁₂ powder which was crushed to an average particle diameter of 5.5 µm and oxide glass powder having an average particle diameter of 0.5 µ m were weighed at a ratio of 75 : 25 These materials were dispersed and mixed with an acrylic binder and a dispersing agent by using water as a solvent to prepare a negative electrode slurry. The slurry was subjected to defoaming by reducing pressure and then was formed by using a doctor blade and dried to provide a negative electrode green sheet having thickness of 40 µ m.

### Preparation of an electrode-electrolyte laminate

The positive electrode green sheet and the negative electrode green sheet which were made in the above described manner were respectively cut to a rectangular shape having width of 25mm and the electrolyte green sheet was cut to a rectangular shape having width of 30mm. One sheet of the positive electrode green sheet, two sheets of the electrolyte green sheet, and one sheet of the negative electrode were superposed one upon another and laminated together by pressing by a heated roll press. The laminate was then pressed by using CIP (cold isotropic pressure pressing) at room temperature and at 196.1 MPa. The laminate then was heated at 450°C in an electric furnace to remove the binder. Then, the temperature was quickly lifted to 900°C and the laminate was held at this temperature for 5 minutes and then cooled whereby a sintered laminate consisting of the positive electrode, electrolyte and negative electrode was produced.

### Preparation of a positive electrode collector

Polyfluorovinylidene (Pvdf) was added to N-methyl pyrrolidone (NMP) and these materials were solved and stirred by a biaxial mixer for 8 hours. As a positive electrode collector material, commercially available aluminum powder having an average particle diameter of 1.0 µ m was added and the mixture was stirred for 12 hours. The slurry was subjected to defoaming by reducing pressure and coated on the positive electrode by using a doctor blade at a coating speed of 0.3m/min. to a thickness of 5µ m. The slurry was dried first at 80°C and then dried again at 90°C. After drying, the laminate was removed of the binder in an electric furnace and sintered to provide a positive electrode collector.

### Preparation of a negative electrode collector

Polyfluorovinylidene (Pvdf) was added to N-methyl pyrrolidone (NMP) and these materials were solved and stirred by a biaxial mixer for 8 hours. As a negative electrode collector material, commercially available cupper powder having an average particle diameter of 1.5 µ m was added and the mixture was stirred for 12 hours. The slurry was subjected to defoaming by reducing pressure and coated on the positive electrode by using a doctor blade at a coating speed of 0.4m/min. to a thickness of 5 µ m. The slurry was dried first at 80°C and then dried again at 90°C. After drying, the laminate was removed of the binder in an electric furnace and sintered to provide a negative electrode collector.

### Production of a fully solid lithium ion secondary battery

An aluminum foil was connected as a positive electrode lead on the positive electrode side of the sintered laminate having the collector, electrodes and solid electrolyte provided in the above described manner. Similarly, a cupper foil was connected as a negative electrode lead on the negative electrode side of the sintered laiminate. The laminate was sealed in a laminate film made of aluminum which is coated with an insulating material and a lithium ion secondary battery was thereby produced. The battery could be charged and discharged and discharged at an average voltage of 2.3V.

### Example 2

### Preparation of a positive electrode collector green sheet

The slurry containing aluminum powder obtained in Example 1 was formed at a coating speed of 0.3m/min. to a thickness of 45 µ m by using a doctor blade on a PET film which was applied with a release processing. Then the slurry was dried first at 80°C and then dried again at 90°C to provide a positive electrode collector green sheet.

### Preparation of a negative electrode collector green sheet

The slurry containing cupper powder obtained in Example 1 was formed at a coating speed of 0.4m/min. to a thickness of 45 µ m by using a doctor blade on a PET film which was applied with a release processing. Then the slurry was dried first at 80°C and then dried again at 90°C to provide a negative electrode collector green sheet.

### Production of a fully solid lithium ion secondary battery

Acetone was sprayed on the positive electrode side of the sintered laminate having the electrodes and the solid electrolyte provided in Example 1 and the positive electrode collector green sheet was adhered to the positive electrode. After drying, the binder was removed in an electric furnace and the laminate was sintered to provide the positive electrode collector. In a similar manner, acetone was sprayed on the negative electrode side of the laminate and the negative electrode collector green sheet was adhered to the negative electrode. After drying, the binder was removed in the electric furnace and the laminate was sintered to provide the negative electrode collector. An aluminum foil was connected as a positive electrode lead on the positive electrode side. Similarly, a cupper foil was connected as a negative electrode lead on the negative electrode side. The laminate was sealed in a laminate film made of aluminum which is coated with an insulating material and a lithium ion secondary battery was thereby produced. The battery could be charged and discharged and discharged at an average voltage of 2.3V.

## Claims

1. A method for manufacturing a lithium ion secondary battery comprising:
preparing a laminate comprising a solid electrolyte and a solid electrode or an electrode green sheet which is laminated on at least one surface of the solid electrolyte; and
providing a collector by laminating a collector material in the form of particles on the electrode or the electrode green sheet and sintering the collector material.

2. A method as defined in claim 1 wherein the collector is laminated by coating a slurry containing the collector material.

3. A method as defined in claim 1 wherein the collector is laminated by attaching a green sheet made by drying a slurry containing the collector material.

4. A method as defined in claim 2 or 3 wherein the collector material comprises metal powder.

5. A method as defined in claim 2 or 3 wherein the collector material comprises metal oxide powder.

6. A method as defined in any of claims 1 - 5 wherein the collector material has an average particle diameter within a range from 0.001 µ m to 20 µ m.

7. A method as defined in any of claims 1 - 6 wherein the solid electrolyte is produced by heat treating a green sheet comprising lithium ion conductive inorganic powder or inorganic powder which becomes lithium ion conductive when it is heat treated or both of them.

8. A method as defined in claim 7 wherein the lithium ion conductive inorganic powder has a crystal of Li_{1+x+z}Mₓ(Ge_{1-y}Ti_{y})₂₋ₓSi_{z}P_{3-z}O₁₂ (0≦x≦0.8, 0≦y≦1.0, 0≦z≦0.6 and M is one or both of Al and Ga).

9. A method as defined in claim 7 or 8 wherein the inorganic powder which becomes lithium ion conductive when it is heat treated comprises, in mol % on oxide basis:
| | |
|---|---|
| Li₂O | 10 -25% |
| Al₂O₃ and/or Ga₂O₃ | 0.5 - 15% |
| TiO₂ and/or GeO₂ | 25 - 50% |
| SiO₂ | 0 - 15% and |
| P₂O₅ | 26 - 40%. |

10. A method as defined in claim 2 wherein the electrode is laminated by coating an electrode slurry comprising an active material on the solid electrolyte and sintering the electrode slurry.

11. A method as defined in claim 3 wherein the electrode is laminated by providing an electrode green sheet made by drying a slurry comprising an active material on the electrolyte and sintering the electrode green sheet.

12. A method for manufacturing a circuit substrate comprising a step of preparing a laminate by laminating an electrode or an electrode green sheet on at least one surface of a solid electrolyte; a step of laminating a collector material in the form of particles between the laminate and a current conducting unit of the circuit substrate; and a step of sintering the collector material.
